Europäisches Patentamt

European Patent Office

Office européen des brevets

(19)

(11) Publication number: **0 019 333**
**B1**

## (12) EUROPEAN PATENT SPECIFICATION

(45) Date of publication of patent specification: 07.03.84

(51) Int. Cl.³: **B 65 G 17/06, A 22 B 3/06**

(21) Application number: **80200421.8**

(22) Date of filing: **02.05.80**

(54) An apparatus for stunning animals to be slaughtered, such as pigs.

(30) Priority: **10.05.79 NL 7903677**

(43) Date of publication of application:
**26.11.80 Bulletin 80/24**

(45) Publication of the grant of the patent:
**07.03.84 Bulletin 84/10**

(84) Designated Contracting States:
**AT BE CH DE FR GB IT LI LU NL SE**

(56) References cited:
DE - B - 1 044 707
DE - C - 327 372
DE - C - 327 780
DE - C - 345 352
FR - A - 520 422
FR - A - 2 090 671
NL - A - 7 113 155
NL - A - 7 705 519
US - A - 2 812 051
US - A - 3 034 638
US - A - 3 245 517

(73) Proprietor: **MACHINEFABRIEK G.J. NIJHUIS B.V.
Parallelweg 4
NL-7102 DE Winterswijk (NL)**

(72) Inventor: **Nijhuis, Johan Willem
Haitsma Mulierweg 53
Winterswijk (NL)**

(74) Representative: **van der Beek, George Frans, Ir.
et al,
Nederlandsch Octrooibureau P.O. Box 29720
NL-2502 LS The Hague (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

An apparatus for stunning animals to be slaughtered, such as pigs

The invention relates to an apparatus for stunning animals to be slaughtered, such as pigs, comprising at least one conveyor, said conveyor including two endless conveyor means, said conveyor means being positioned to form a substantially V-shaped passageway therebetween, each one of said conveyor means consisting of endless chains running over reversing wheels at the ends of the conveyors and each provided with plates therebetween, said plates being contiguous with respect to each other at the location of the operating surface, and said plates having a dimension in the direction of conveyance which corresponds with the length of a link of the chains.

An apparatus of this type has been described in the NL—A—7705519. In this known apparatus the plates have rectangular cross section. In the operating surface said plates are quite contiguous with respect to each other but at the location of the reversing wheels said plates provide gaps. At the entrance of each conveyor means these gaps are closed, whereas said gaps are formed again at the exit.

As a result of this the hide, tail or legs of the animal may get caught at the entrance and exit whereas at the location of the transfer from a first conveyor means to a second conveyor means the gaps then formed may entrain the legs into the space in which the conveyor means move in opposite directions whereupon the closing gaps of the following conveyor means may cause serious damages.

According to the invention this object is attained in that said plates are operable to hinge about each other at the edges by means of interengaging curved edge portions, said edge portions being concentric with the associated hinge shaft of the chain links and being shaped such that the cylindrical front edge of each plate is covered over part of its front edge surface by the rear edge of the preceding plate, said plates further having a curved outer plate between said edge portions which plane has a curvature such that at the location of each reversing wheel said plane is concentric with the axis of said reversing wheel. This means that according to the invention there no longer exists a gap between the adjacent plates at the location of the hinge because the overlapping rear edge of each plate covers the cylindrical front edge of the next plate so that only a relative shifting movement of the edge portions takes place when running around the reversing wheels.

Due to the curvature of the outer plane of each plate in the region between its edges the plates not only form a smooth cylindrical surface at the location of the reversing wheels, thus avoiding any risk of damage to the animal and further in the straight portions of the conveyor keep the hide of the animal at a small distance from the overlapping edge portions thus avoiding that hairs of the hide get caught.

It is observed that from DE—C—345352, a chain conveyor is known comprising plates having a cylindrical front edge overlapped by the concentric rear edge of the preceding plate to avoid the opening of a gap with the aim to keep the conveyor surface closed.

Notwithstanding the fact that this feature is known for normal conveyors already for a very long time it did not teach the expert how to solve the problems of irritating and damaging animals in the conveying means of a stunning apparatus.

Furthermore from the published DE—B—1,044,707 it is known as well to shape the individual parts of an endless conveying chain such that each element between its front edge and rear edge has a curved outer surface such that at the location of the reversing wheels a close cylindrical surface is formed. This conveyor chain is meant for the transportation of wooden parts towards a wood cutting machine and does not disclose how to solve the problems occurring in the transportation of animals.

According to the invention preferably at the location of the entrance of one conveyor, or at the area of transition between subsequent conveyors, guide rolls are provided placed parallel to the operating surfaces of the conveyor means in such a way that a plane tangential to the curved plates is tangential as well to said rollers. Said guide rolls form a more or less continuous extension of the operating surface and accordingly reduce the risk that a leg of an animal can enter into the space between subsequent conveyors while there is but a little chance that the leg of an animal gets caught between the plates of the conveyor means and a guide roll because the rolls may be positioned closed to said plates.

These guide rolls may be freely rotatable but they also may be driven preferably at such a speed that the peripheric velocity of said rolls equals the velocity of the preceding conveyor means to avoid further conveyance of a pig present at this transfer position when said first means is stopped due to a too large supply.

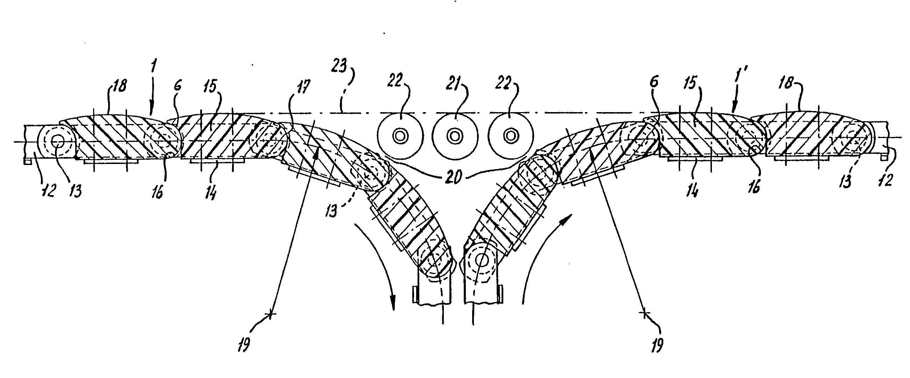

The invention now will be further elucidated with reference to the drawing, which discloses more details of the construction of the conveyor means at the exit of the conveyor means 1 and the entrance of conveyor means 1'. Each conveyor means comprises two chains, an upper chain and a lower chain, each one of said chains having links 12 and hinge shafts 13. Each one of said links possesses a lip 14 on which a plate 15 is mounted.

Each one of said plates has a front or leading edge 16 as well as a trailing edge 17.

As shown in the drawing the trailing edge 17 of each plate is partly concentric with the hinge shaft 13 and the same holds true for the leading edge 16. The trailing edge closely surrounds the leading edge 16 of the subsequent plate.

In the drawing both conveyor means move from left to right. Each conveyor means includes end wheels, not shown, centred at point 19. These wheels define the path of the chains in the manner of conventional conveyors.

The plates have a curved surface 18, the curvature of which is such that at the wheels said curvatures 18 are concentric with the pitch circle of the chains, i.e. the plates form a semicircular path centred on the axis 19 of the wheels.

Between the exit of the conveyor means 1 and the entrance of the conveyor means 1' a gap 20 is formed. In said gap 20 guide rolls 21 and 22 are located which are freely rotatable and have their peripheric surface tangential to the plane 23 of the operating surfaces of the conveyor means 1 and 1'.

## Claims

1. An apparatus for stunning animals to be slaughtered, such as pigs, comprising at least one conveyor, said conveyor including two endless conveyor means (1, 1'), said conveyor means being positioned to form a substantially V-shaped passageway therebetween, each one of said conveyor means consisting of endless chains running over reversing wheels at the ends of the conveyors and each provided with plates (15) therebetween, said plates being contiguous with respect to each other at the location of the operating surface (18) and said plates having a dimension in the direction of conveyance which corresponds with the length of a link (12) of the chains, characterized in that said plates (15) are operable to hinge about each other at the edges by means of interengaging curved edge portions (16, 17), said edge portions being concentric with the associated hinge shaft (13) of the chain links (12) and being shaped such that the cylindrical front edge (16) of each plate is covered over part of its front edge surface by the rear edge (17) of the preceding plate, said plates further having a curved outer plane (18) between said edge portions which plate has a curvature such that at the location of each reversing wheel said plate is concentric with the axis (19) of said reversing wheel.

2. The apparatus according to claim 1, characterized in that the location of the entrance of one conveyor or at the area of transition between subsequent conveyors guide rolls (21, 22) are provided placed parallel to the operating surfaces (18) of the conveyor means (1, 1') in such a way that a plane (23) tangential to the curved plates (15) is tangential as well to said rollers.

## Patentansprüche

1. Apparat zum Betäuben von Schlachtvieh, wie Schweinen, mit mindestens einem Förderer, welcher zwei endlose Fördermittel (1, 1') enthält, die zur Ausbildung eines im wesentlichen V-förmigen Durchlaßweges dazwischen angeordnet sind, wobei jedes der Fördermittel aus über Umlenkräder an den Enden der Förderer laufenden endlosen Ketten besteht, zwischen denen jeweils Platten (15) vorgesehen sind, welche am Ort der Arbeitsfläche (18) aneinandergrenzend angeordnet sind und in Förderrichtung eine Abmessung besitzt, die der Länge eines Kettengliedes (12) entspricht, dadurch gekennzeichnet, daß die Platten (15) mittels miteinander in Eingriff befindlicher gebogener Kantenabschnitte (16, 17) aneinander an den Kanten gelenkig verbunden betreibbar sind, daß die Kantenabschnitte konzentrisch mit der zugehörigen Gelenkwelle (13) der Kettenglieder (12) liegen und so ausgebildet sind, daß die zylindrische Vorderkante (16) jeder Platte über einen Teil ihrer Frontkantenfläche durch die Hinterkante (17) der vorangehenden Platte bedeckt ist, die Platten weiter eine gekrümmte Außenfläche (18) zwischen den Kantenabschnitten besitzen, welche eine derartige Krümmung besitzt, daß am Ort jedes Umlenkrades diese Fläche konzentrisch mit der Achse (19) des Umlenkrades ist.

2. Apparat nach Anspruch 1, dadurch gekennzeichnet, daß am Ort des Einganges eines Förderers oder im Übergangsbereich zwischen aufeinanderfolgenden Förderern Führungswalzen (21, 22) vorgesehen sind, die parallel zu den Arbeitsflächen (18) der Fördermittel (1, 1') in solcher Weise angeordnet sind, daß eine zu den gekrümmten Platten (15) tangentiale Ebene (23) ebenfalls zu den Walzen tangential ist.

## Revendications

1. Appareil pour étourdir des animaux à abattre, tels que porcs, comportant au moins un transporteur, ledit transporteur comportant deux convoyeurs sans fin (1, 1'), lesdits convoyeurs étant disposés de façon à former entre eux un passage sensiblement en V, chacun desdits convoyeurs étant composé de chaînes sans fin qui contournent des roues d'inversion de mouvement situées aux extrémités des convoyeurs et chaque chaîne étant pourvue de plaques interposées entre lesdites chaînes, lesdites plaques étant contiguës les unes aux autres à l'emplacement de la surface active (18) et lesdites plaques ayant dans la direction de transport une dimension qui correspond à la longueur d'un maillon (12) des chaînes, caractérisé en ce que lesdites plaques (15) sont agencées pour s'articuler les unes sur les autres sur les bords au moyen de tronçons marginaux incurvés (16, 17) emboîtés l'un dans l'autre, lesdits tronçons marginaux étant concentriques à l'axe d'articulation associé (13) des maillons de chaîne (12) et étant conformés en sorte que le bord avant cylindrique (16) de chaque plaque est recouvert sur une partie de sa surface marginale frontale par le bord arrière (17) de la plaque précédente, lesdites plaques ayant en outre une face extérieure courbe (18) entre lesdites parties marginales laquelle face a une courbure telle qu'à l'emplacement de chaque oue d'inversion de mouvement ladite face est concentrique à l'axe (19) de ladite roue d'inversion de mouvement.

2. Appareil selon la revendication 1, caractérisé en ce qu'à l'emplacement de l'entrée d'un convoyeur ou au niveau de la zone de transition entre convoyeurs successifs il est prévu des rouleaux de guidage (21, 22) placés parallèlement aux surfaces actives (18) des convoyeurs (1, 1') de telle sorte qu'un plan (23) tangentiel aux plaques courbes (15) est aussi tangentiel auxdits rouleaux.